# EUROPEAN PATENT APPLICATION

(11) **EP 2 158 963 A1**
(43) Date of publication of application: **03.03.2010**
(21) Application number: 08163446.1
(22) Date of filing: 01.09.2008
(51) Int. Cl.: B01J 19/24, C12P 7/10

(54) **Method and device for treating biogenic material**

(71) Applicant: Demetrion Rechte GmbH, 6330 Cham (CH)
(72) Inventor: Hügle, Prof. Dr., Thomas, 24118, Kiel (DE); Weigel, Ralf, 67240, Bobenheim (DE)

(57) **Abstract**

A method of subjecting a flowable suspension comprising biogenic material to a temperature hydrolysis by passing it successively through a first downward conduit section, a first connecting conduit section (10) which connects the outlet of the first downward conduit section with the inlet of a second downward conduit section, and the second downward conduit section, wherein part of the first connecting conduit section (10) is formed by a first upward part (14) through which the suspension is passed. The flow velocity in the upward part (14) is higher than flow velocity in each of the downward conduit sections.

## Description

### Background of the Invention

The invention relates to a method and a device for subjecting a flowable suspension comprising biogenic material to a temperature hydrolysis.

### State of the Art

Biogenic material, including waste, can be converted in a wealth of useful products by fermentation which involves the use of living organisms such as bacteria or other microorganisms. For example, methane-containing biogas can be generated by anaerobic microbial digestion in a fermentation vessel. In multiple steps, the microorganisms break down the complex macromolecules of the biogenic material, thereby generating biogas comprising methane, carbon dioxide, water and other gaseous molecules. Subsequently, the biogas is cleaned and then converted into electrical and thermal energy in a combustion engine.

In general, of the many steps performed by the microorganisms in the fermentation vessel, the hydrolysis step is the slowest and therefore determines the overall speed of anaerobic microbial degradation. In order to provide for faster hydrolysis, it has been suggested to subject the biogenic material to a temperature hydrolysis step before introducing it into the fermentation vessel. Temperature hydrolysis involves exposing the biogenic material to elevated temperatures in order to induce hydrolysis of complex macromolecules. It has been found that in particular the hydrolysis of cellulose and hemi-cellulose can be greatly expedited by the application of high temperatures.

Experimental temperature hydrolysis installations have been built in which a suspension of biogenic material is passed through a series of horizontally extending shell and tube heat exchanger for heating up the suspension, a horizontally extending tube-type hydrolysis reactor, and another series of horizontally extending shell and tube heat exchanger for cooling town the suspension again, before it is passed into the fermentation vessel.

The German patent DE 197 23 510 C1 describes a device where, downstream of a mashing vessel, a suspension of biogenic residues under high pressure circles in a loop-type hydrolysis reactor. The reactor has a double wall through which thermal oil is circulated to heat up the suspension in the reactor to maximum temperature of 250°C. The pressure in the reactor is chosen high enough to maintain the suspension in the liquid phase while hydrolysis takes place in the reactor.

The German patent publication document DE 43 08 920 A1 discloses a device for subjecting biogenic residue to a chemo-physical hydrolysis in a reactor provided downstream of an enzymatic hydrolysis reactor. The material is pressed out producing an eluate and a remainder, the latter being fed into the chemo-physical hydrolysis reactor through an inlet at the bottom of the reactor. A jet of hot steam is introduced into the material to heat it up and an acid is added to aid hydrolysis. When the material reaches the top of the reactor, a leach is added to neutralize the acid. Then, the material is fed back into the enzymatic hydrolysis reactor.

The German utility model DE 77 33 614 U discloses a heat exchanger of the 2-pass countercurrent-type, which comprises two parallel bundles of double-walled tubes. A first medium flows through the inner tubes while a second medium flows in the spaces between the two walls. More particularly, the first medium flows downward through the inner tubes of the first bundle and then arrives in a chamber at the bottom of the heat exchanger from where it is led in the opposite direction through the inner tubes of the second bundle. The second medium flows downwards between the walls of the tubes of the second bundle and is then redirected at the bottom to flow back upwards between the walls of the tubes of the first bundle.

### Problem to be solved by the invention

The inventors have found that when a suspension of biogenic material is led through a series of heat exchangers and hydrolysis reactors, the effectiveness of the hydrolysis device can be affected by sedimentation of the biogenic material. Sedimentation can e.g. entail incrustations at hot parts of heat exchangers, impairing the heat transfer. In the worst case, the sedimentation can lead to an outright blockage of the device. Regular cleaning of the device may become necessary which increases maintenance costs, which include the costs incurred by down times of the device.

It is thus an objective of the present invention to reduce costs and improve effectiveness of the temperature hydrolysis.

### Solution according to the invention

According to the invention, the problem is solved by providing a method of subjecting a flowable suspension comprising biogenic material to a temperature hydrolysis by passing it successively through a first downward conduit section, a first connecting conduit section which connects the outlet of the first downward conduit section with the inlet of a second downward conduit section, and the second downward conduit section, wherein part of the first connecting conduit section is formed by a first upward part through which the suspension is passed, and the flow velocity in the upward part is higher than the flow velocity in each of the downward conduit sections.

Also, the problem is solved by providing a device for subjecting a flowable suspension comprising biogenic material to a temperature hydrolysis, the device having first and second downward conduit sections for the suspension to pass through sequentially, and a first connecting conduit section that connects the outlet of the first downward conduit section with the inlet of the second downward conduit section, wherein part of the first connecting conduit section is formed by a first upward part so that the suspension flowing from the first to the second downward conduit section passes through the first upward part, and the cross-sectional areas of flow of the first upward part is smaller than the cross-sectional area of flow of each of the downward conduit sections.

The inventors have found that at low flow velocities sediment formation is more likely to occur. They have also found that sediment formation is more likely to occur if the suspension flows in horizontal direction. Thus, by letting the suspension flow downwards at slow velocity and then letting it flow back upwards at higher velocity, sediment formation can be prevented.

In the context of the present disclosure, "temperature hydrolysis" means that the suspension is subjected to an elevated temperature to induce or facilitate hydrolysis. In the context of the present disclosure the flow velocity in a given part of the conduit section is defined as the average flow velocity across the cross-sectional area of flow. In the context of the present disclosure, "downward" means that in operation, the intended direction of flow of the suspension and the direction of gravity draw an angle of less than 90° (based on a 360° full circle), and "horizontal" means perpendicularly to the direction of gravity.

### Description of preferred embodiments of the invention

Preferred features of the invention which may be applied alone or in combination are discussed in the dependent claims.

Preferably, the flowable suspension is an aqueous suspension of biogenic material. The biogenic material preferably is reduced to small pieces, e.g. in a mill or a macerator and mixed with water or, more preferably, with recyclate coming from a fermenter, or with a liquid component of the recylcyte obtained by means of a separation device. The biogenic material may be renewable raw material, preferably renewable vegetable raw material such as corn, sugar-beet, sugar-cane, straw or wood. It may also be a biogenic residue such as organic industrial or agricultural waste, sewage sludge, slaughter waste, kitchen slops, food leftovers and adulterated food stuff. The invention can be employed particularly advantageously with biogenic material comprising cellulose and/or hemi-cellulose and/or lignin. A fraction of biogenic material in the suspension preferably is between 2 and 30 %, more preferably between 4 and 20 %, more preferably between 8 and 15 %, more preferably between 10 and 13 % in terms of dry mass of biogenic material.

In a preferred method according to the invention, subsequently to the second downward section, the suspension is passed through one or more further connecting conduit sections and downward conduit sections, each of the further connecting conduit sections connecting the outlet of a downward conduit section being previous in sequence with the inlet of a downward conduit section being next in sequence. Preferably, part of each of the further connecting conduit sections is formed by an upward part which the suspension is passed through, the flow velocities in each of the further upward parts being higher than flow velocities in each of the downward conduit sections.

One or more or the connecting conduit sections may comprise several parts. These may include upward parts as well as horizontal or even downward parts. Preferably, the flow velocities in each upward part of the connecting conduit section(s) are higher than the flow velocities in each of the downward conduit sections. Preferably, the flow velocities in each horizontal part of the connecting conduit section(s) are higher than the flow velocities in each of the downward conduit sections. Preferably, the flow velocities in each part of the connecting conduit section(s) are higher than the flow velocities in each of the downward conduit sections.

Preferably, the flow velocity in each of the upward parts, preferably in every horizontal or upward part, more preferably every part of the connecting conduit section(s) is at least twice as high as the flow velocity in each of the downward conduit sections, more preferably at least four times, more preferably at least eight times, more preferably at least twelve times, more preferably at least sixteen times, more preferably at least nineteen times.

In a preferred embodiment of the invention, the flow velocity in each of the upward parts, more preferably in every horizontal or upward part, more preferably in every part of the connecting conduit sections is higher than 0,5 meters per second (m/s), more preferably higher than 1 m/s, more preferably equal or higher than 1,5 m/s. In a preferred embodiment of the invention, the flow velocity in each of the downward conduit sections is lower than ¼ meters per second (m/s), more preferably lower than ⅛ m/s, more preferably lower than ¹/₁₆ m/s, more preferably equal or lower than ¹/₁₉ m/s.

A preferred device according to the invention has one or more further downward conduit sections for the suspension to pass through after the second downward conduit section, and one or more further connecting conduit sections that connect the outlet of a downward conduit section being previous in sequence with the inlet of a downward conduit section being next in sequence. Preferably, part of each of the further connecting conduit sections is formed by an upward part so that the suspension flowing from the previous to the next downward conduit section passes through the respective upward part, the cross-sectional areas of flow of each of the further upward parts being smaller than the cross-sectional areas of flow of each of the downward conduit sections.

The downward conduit sections may comprise of a single or several parallel tubes. Likewise, the connecting conduit sections or parts of them may comprise of single or several parallel conduits. In the case of several parallel tubes, the cross-section area of flow is the sum of the cross-sectional areas of flow of the individual parallel tubes.

Preferably, the cross-sectional areas of flow in every horizontal or upward part of the connecting conduit sections are higher than the cross-sectional area of flow in each of the downward conduit sections.

In a preferred embodiment of the invention, at least one of the downward conduit sections forms the part of a heat exchanger in which heat is transferred from or to the suspension while it passes through the conduit section. Preferably, the heat exchanger is a shell and tube-type heat exchanger, comprising one or more tubes extending lengthwise inside a tube-like shell. Preferably, several tubes extend lengthwise, forming a bundle. The suspension preferably flows through the tube or tubes, the latter thus forming the downward conduit sections. A flowable heat transfer medium runs through the shell, e.g. over the tubes. However, embodiments of the invention are also possible in which the suspension flows through the shell and the heat transfer medium flows through the tube or tubes. The heat exchanger preferably is of the counter current-type, i.e. the suspension flows in a direction opposite to the direction of the heat transfer medium. Thus, in the shell and tube-heat exchanger, the heat transfer medium runs upwards, in opposite direction to the downwards flowing suspension. The heat transfer medium preferably is water or thermal oil.

Alternatively, in an embodiment of the invention heat may be transferred in a heat exchanger directly from the suspension in one part of the device to the suspension in another part of the device. In this case, the suspension would take the role of the heat transfer medium in the heat exchanger. In particular, the suspension downstream the hydrolysis reactor or reactors may transfer heat in one or more heat exchangers directly to the suspension upstream the hydrolysis reactor or reactors.

In a preferred embodiment of the invention, in a series of two or more consecutive downward conduit sections each section forms the part of a heat exchanger in which heat is transferred from or to the suspension while it passes through the conduit section. Preferably, each of the two or more consecutive downward conduit sections forms part of a different heat exchanger.

Preferably, the heat transfer medium flows through the series of heat exchangers in opposite direction. The order is thus such that it first runs through the heat exchanger which the suspension runs through last and last runs through the heat exchanger through which the suspension runs first. The series of heat exchangers may serve to cool the suspension or to heat the suspension. Preferably, at least one, preferably at least two, for example three, series of heat exchangers for heating and at least one, preferably two, series of heat exchangers for cooling the suspension are provided.

The heat transfer medium may run through a heat exchanger or a series of heat exchangers for cooling and a heat exchanger or series of heat exchangers for heating successively, preferably forming an at least partly closed circuit.

Preferably, the suspension will be heated to temperatures above 100°C, more preferably above 140°C, more preferably at or above 180°C, more preferably at or above 220°C, more preferably above 240°C.

Preferably, at least one of the downward conduit sections forms part of a hydrolysis reactor, preferably a tube reactor, for maintaining the suspension within a certain temperature and pressure range as it passes through the reactor. The reactor(s) for this purpose are provided with an appropriate insulation. More preferably, two or more consecutive downward conduit sections each form part of a hydrolysis reactor. Each of the downward conduit sections preferably forms part of another hydrolysis reactor.

In a preferred embodiment of the invention, the device comprises a sequence of at least one heat exchanger or at least one series of heat exchangers for heating up the suspension, followed downstream by a hydrolysis reactor or a series of hydrolysis reactors, followed further downstream by at least one heat exchanger or at least one series of heat exchangers for cooling down the suspension again. Advantageously, with this embodiment of the invention, by passing through the sequence, the suspension can be heated to within a certain temperature range for hydrolysis, maintained at this temperature for a certain period of time and then cooled down again for further processing. The suspension leaving the device may e.g. be subjected to anaerobic fermentation, in particular for the production of biogas. Alternatively or in addition, the suspension leaving the device may be used for the production of other organic substances, e.g. alcohols, organic acids or ketones.

A preferred type of temperature hydrolysis is temperature-pressure hydrolysis which involves pressuring the suspension in addition to heating it in order to prevent the liquid fraction of the suspension from vaporising. A preferred pressure is above 5 bar, more preferably above 10 bar, more preferably above 20 bar more preferably above 30 bar. Preferably, pressure means are provided for pressuring the suspension, e.g. a pressure pump. The pressure pump is preferably provided upstream the first or upstream the second downward conduit section or series of conduit sections. Preferably, expansion means are provided downstream the pressure mean, preferably downstream the last or downstream the second last downward conduit section or series of conduit sections. An example of an expansion means is an expansion valve.

In a preferred embodiment of the invention, the downward conduit sections are inclined relatively to the horizontal by at least 40°, more preferably by at least 50°, more preferably by at least 60°, more preferably by at least 80°. In a particularly preferred embodiment of the invention, the downward conduit sections are essentially vertical.

In a preferred embodiment of the invention, the upward parts of the connecting conduit sections are inclined relatively to the horizontal by at least 40°, more preferably at least 50°, more preferably at least 60°, more preferably at least 80°. In a particularly preferred embodiment, the upward parts of the connecting conduit sections are essentially vertical.

In a preferred embodiment of the invention, the cross-sectional area of flow of the upward parts, preferably every horizontal or upward part, more preferably every part of the connecting conduit section(s) of the connecting conduit sections is equal or less than half the cross-sectional area of flow of the downward conduit sections, more preferably equal or less than 1/4, more preferably equal or less than 1/8, more preferably equal or less than 1/16, more preferably equal or less than 1/19 of the cross-sectional area of flow of the downward conduit sections.

In a preferred embodiment of the invention, the cross-sectional area of flow in each of the upward parts, more preferably in every horizontal or upward part, more preferably in every part of the connecting conduit sections is equal or lower than 8 000 square millimetres (mm²), more preferably equal or lower than 4 000 mm², more preferably equal or lower than 2 000 mm². In a preferred embodiment of the invention, the cross-sectional area of flow in each of the downward conduit sections is equal or higher than 10 000 mm², more preferably equal or higher than 20 000 mm², more preferably equal or higher than 40 000 mm².

The length of each of the downward conduit sections preferably is at least 2 m, more preferably at least 3 m, more preferably at least 4 m, more preferably at least 5 m.

### Brief description of the drawings

The invention is illustrated in greater detail with the aid of schematic drawings:
Fig. 1 shows a simplified process flow diagram of a method and device according to the present invention;
Fig. 2 shows a simplified representation of an exemplary embodiment of the present invention, in which the downward conduit sections form parts of two heat exchangers; and
Fig. 3 shows a cross-section through the heat exchangers along the plane A-A in Fig. 2.

### Detailed description of embodiments of the invention

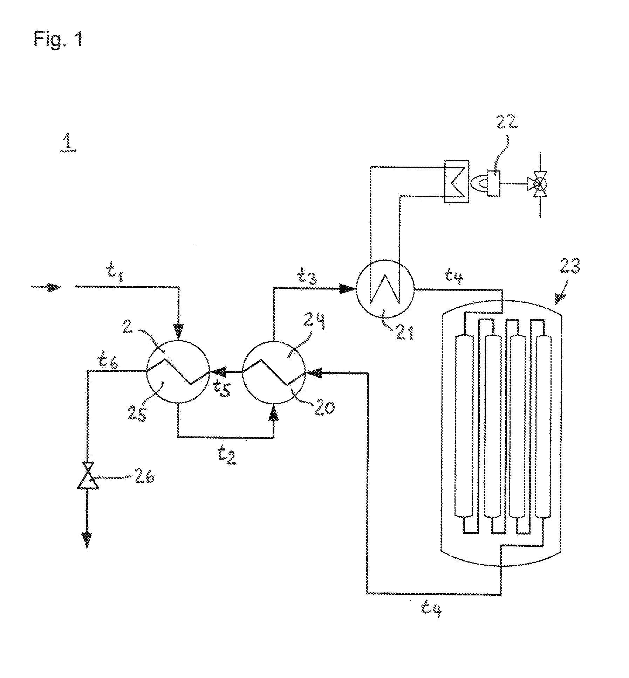

An embodiment of the device 1 according to the invention is illustrated in Fig. 1 by means of a simplified process flow diagram. Biogenic material has been reduced to small pieces in a mill or a macerator (not shown) and has then been suspended in the liquid component of an aqueous recirculate coming from a fermenter (not shown) to form a suspension comprising about 10 to 15 % biogenic material (with respect to the dry mass of the biogenic material). The liquid component has been separated from the remainder by means of a separation device (not shown). The suspension is pressured by a pressure pump (not shown) to approximately 25 bar and then introduced at a temperature t1 of approximately 20°C into a series 2 comprising four consecutive identical downward conduit sections, and three connecting conduit sections which connect adjacent downward conduit sections. Each downward conduit section forms the tube bundle of a shell and tube-heat exchanger.

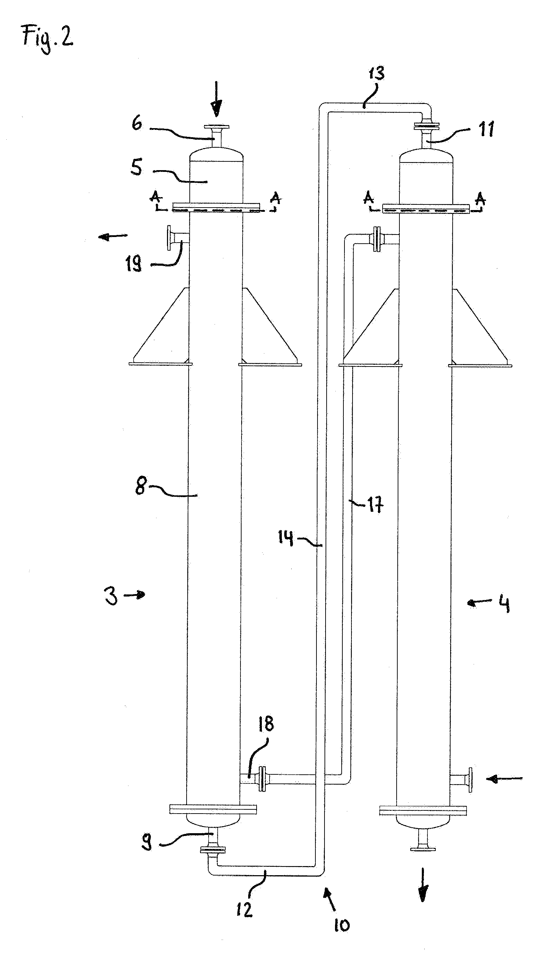

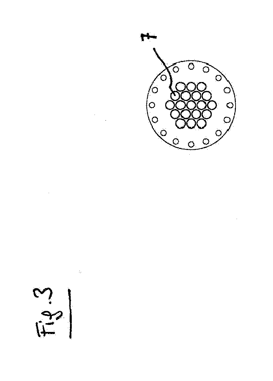

For exemplary illustration, in Fig. 2, two adjacent heat exchangers 3 and 4 of a series of heat exchangers are shown. The suspension enters a discharge chamber 5 at the top of the first heat exchanger 3 through an inlet 6. From there, it is led into nineteen parallel tubes 7 with an inner diameter of approximately 50 mm that run down the remaining part 8 of the heat exchanger to leave the heat exchanger 3 at the outlet 9. In Fig. 3, which shows is a cross-section through the plane A--A in Fig. 2, the onsets of nineteen tubes 7 can be seen. The connecting conduit section 10 that connects the outlet 9 with the inlet 11 of the next heat exchanger 4 comprises of two short horizontal parts 12, 13 and a vertical part 14. The cross-section of the connecting conduit section 10 is the same as that of the tubes 7, approximately 50 mm. Water as a heat transfer medium enters the shell of the second heat exchanger 4 through the inlet 15, flows upward pass the tubes to leave the heat exchanger as outlet 16. The shell has an inner diameter of approximately 350 mm. From outlet 16, the water is led by means of pipe 17 to the inlet 18 of the first heat exchanger 3, which it leaves through the outlet 19.

In order to enable servicing of individual heat exchangers 3, 4 without having to interrupt operation of the device, bypass pipes (not shown) are provided as well as valves (not shown) in the bypass and at the inlet and the outlet of the heat exchangers 3, 4. With the valve in the bypass, the bypass can be opened for the suspension to bypass the heat exchanger 3, 4 and with the valves at the inlet and the outlet of the heat exchanger 3, 4, the heat exchanger 3, 4 can be cut off from the system in which the suspension flows. The heat exchanger 3, 4 can then be opened or even removed, if necessary.

The suspension leaves the series 2 of heat exchangers at a temperature t2 of about 100°C. From there, it is passed into another series 20 of four heat exchangers, which are essentially identical to the previous series of heat exchangers but use thermal oil rather than water as a heat transfer medium. The suspension leaves this second series of heat exchangers at a temperature t3 of approximately 140°C to enter a third series 21 of two heat exchangers which again are essentially of the type shown in Fig. 2 and use thermal oil heated by a heat source 22 or the waste heat of a combustion engine (not shown) run by the biogas coming from the fermenter. The suspension leaves the series of heat exchangers 21 at a temperature t4 of about 190°C to enter a series of 23 of at least two, in the present embodiment four, tube-type hydrolysis reactors. These reactors comprise of at least two, in the present embodiment four, downward conduit sections with a volume that guarantees the statutory hydraulic retention time of at least 20 minutes even in the event that one of the tube-type hydrolysis reactors is excluded of the hydrolysis process for example for maintenances, connected by a connecting conduit section essentially identical to the connecting conduit section 10 used to connect the heat exchangers. The tube-type hydrolysis reactors are also connected in such a way that the hydrolysis process must not be interrupted in case of maintenance. The reactors are insulated by an appropriate insulating material to ensure that the suspension essentially keeps at a constant temperature.

Then, the suspension is led to another series 24 of four heat exchangers essentially identical to the series of heat exchangers 20. Thermal oil as a heat transfer medium circulates between the series of heat exchangers 20 and 24 in order to use the heat discharged from the suspension to the thermal oil in the series 24 of heat exchangers to heat the suspension in the series 20 of heat exchangers. The suspension leaves the series 24 of heat exchangers at a temperature t5 of approximately 125°C to enter a final series 25 of heat exchangers. Here, the suspension is cooled down using water that circulates between the series 25 of heat exchangers and the series 2 of heat exchangers. The suspension leaves the series 25 of heat exchangers at a temperature t6 of approximately 70°C. From there, it is led to an expansion valve 26 to reduce the pressure of the suspension again to atmospheric pressure and then into the fermenter to generate biogas by means of anaerobic fermentation.

## Claims

1. A method of subjecting a flowable suspension comprising biogenic material to a temperature hydrolysis by passing it successively through a first downward conduit section, a first connecting conduit section (10) which connects the outlet of the first downward conduit section with the inlet of a second downward conduit section, and the second downward conduit section, wherein part of the first connecting conduit section (10) is formed by a first upward part (14) through which the suspension is passed, **characterized in that**
the flow velocity in the upward part (14) is higher than flow velocity in each of the downward conduit sections.

2. The method according to claim 1, **characterised in that**
subsequently to the second downward section, the suspension is passed through one or more further connecting conduit sections and downward conduit sections, wherein each of the further connecting conduit sections connects the outlet of a downward conduit section being previous in sequence with the inlet of a downward conduit section being next in sequence, and part of each of the further connecting conduit sections is formed by an upward part which the suspension is passed through, the flow velocities in each of the further upward parts being higher than flow velocities in each of the downward conduit sections.

3. The method according to claim 1 or 2, **characterised in that**
the flow velocities in each horizontal (12, 13) or upward part (14) of the connecting conduit sections (10) are higher than the flow velocities in each of the downward conduit sections.

4. The method according to any one of the previous claims, **characterized in that**
the flow velocity in each of the upward parts (14) of the connecting conduit sections is at least twice as high as the flow velocity in each of the downward conduit sections.

5. The method according to any one of the previous claims, **characterized in that**
the flow velocity in each of the upward parts (14) of the connecting conduit sections is higher than 0,5 meters per second.

6. The method according to any of the previous claims, **characterized in that**
the flow velocity in each of the downward conduit sections is lower than ¼ meters per second.

7. A device (1) for subjecting a flowable suspension comprising biogenic material to a temperature hydrolysis, the device having first and second downward conduit sections for the suspension to pass through sequentially, and a first connecting conduit section (10) that connects the outlet of the first downward conduit section with the inlet of the second downward conduit section, wherein part of the first connecting conduit section (10) is formed by a first upward part (14) so that the suspension flowing from the first to the second downward conduit section passes through the first upward part (14), **characterised in that**
the cross-sectional areas of flow of the first upward part (14) is smaller than the cross-sectional area of flow of each of the downward conduit sections.

8. The device (1) according to claim 7, **characterised in that**
the device has one or more further downward conduit sections for the suspension to pass through after the second downward conduit section, and one or more further connecting conduit sections that connect the outlet of a downward conduit section being previous in sequence with the inlet of a downward conduit section being next in sequence, wherein part of each of the further connecting conduit sections is formed by an upward part so that the suspension flowing from the previous to the next downward conduit section passes through the respective upward part, the cross-sectional areas of flow of each of the further upward parts being smaller than the cross-sectional areas of flow of each of the downward conduit sections.

9. The device (1) according to claim 7 or 9, **characterised in that**
at least one of the downward conduit sections forms a part of a heat exchanger (3, 4) in which heat is transferred from or to the suspension while the suspension passes through the conduit section.

10. The device (1) according to any one of claims 7 to 9, **characterised in that**
two or more consecutive downward conduit sections each form a part of a heat exchanger (3, 4) in which heat is transferred from or to the suspension while it passes through the conduit section.

11. The device (1) according to any one of claims 7 to 10, **characterised in that**
at least one of the downward conduit sections forms part of a hydrolysis reactor for maintaining the material within a certain temperature and pressure range.

12. The device (1) according to any one of claims 7 to 11, **characterised in that**
the downward conduit sections are inclined relatively to the horizontal by at least 40°.

13. The device (1) according to any one of claims 7 to 12, **characterised in that**
the upward parts of the connecting conduit sections (10) are inclined relatively to the horizontal by at least 40°.

14. The device (1) according to any one of claims 7 to 13, **characterised in that**
the cross-sectional areas of flow of the upward parts of the connecting conduit sections (10) as half or less of the cross-sectional areas of flow of the downward conduit sections.
